(19)

Europäisches
Patentamt
European
Patent Office
Office européen
des brevets

(11) **EP 2 963 791 A1**

(12) **EUROPEAN PATENT APPLICATION**

(43) Date of publication:
**06.01.2016 Bulletin 2016/01**

(51) Int Cl.:
*H02M 1/12* [(2006.01)]      *H02M 1/42* [(2007.01)]
*H02M 5/297* [(2006.01)]

(21) Application number: **15174736.7**

(22) Date of filing: **01.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **04.07.2014 JP 2014138566**

(71) Applicant: **Kabushiki Kaisha Yaskawa Denki
Kitakyushu-shi, Fukuoka 806-0004 (JP)**

(72) Inventors:
• **TAKEDA, Kotaro
Kitakyushu-shi, Fukuoka 806-0004 (JP)**
• **TANAKA, Takashi
Kitakyushu-shi, Fukuoka 806-0004 (JP)**
• **NAKA, Takuya
Kitakyushu-shi, Fukuoka 806-0004 (JP)**
• **YOSHINAGA, Wataru
Kitakyushu-shi, Fukuoka 806-0004 (JP)**
• **IKEDA, Masaki
Kitakyushu-shi, Fukuoka 806-0004 (JP)**

(74) Representative: **Viering, Jentschura & Partner
mbB
Patent- und Rechtsanwälte
Grillparzerstrasse 14
81675 München (DE)**

(54) **SERIES MULTIPLEX MATRIX CONVERTOR, POWER GENERATION SYSTEM, AND METHOD FOR CONTROLLING POWER FACTOR**

(57)      A series multiplex matrix converter (1) includes a power converter (13) and a controller (18). The power converter (13) is disposed between a power system (3) and a rotating electric machine (2), and includes a plurality of power conversion cells (21) connected in series to each other. The controller (18) is configured to control at least one power conversion cell (21) among the plurality of power conversion cells (21) to cause a current to flow from the at least one power conversion cell (21) toward the rotating electric machine (2), and configured to control a rest of the plurality of power conversion cells (21) to cause the current flowing toward the rotating electric machine (2) to flow from the rest of the plurality of power conversion cells (21) toward the power system (3) as a reactive current.

**FIG. 1**

EP 2 963 791 A1

**Description**

BACKGROUND

FIELD OF THE INVENTION

The present invention relates to a series multiplex matrix converter, a power generation system, and a method for controlling a power factor.

DISCUSSION OF THE BACKGROUND

Matrix converters suppress harmonics current and effectively utilize regeneration power, and thus have been attracting attention as coming power converters. Japanese Unexamined Patent Application Publication No. 2006-174559 discloses a series multiplex matrix converter that includes power conversion cells connected in series to form a plurality of stages. Each of the power conversion cells includes a plurality of bidirectional switches.

The contents of Japanese Unexamined Patent Application Publication No. 2006-174559 are incorporated herein by reference in their entirety.

Some matrix converters have difficulty in appropriately controlling the power factor on the power system side. For example, assume that a matrix converter converts voltage of the power system and outputs the converted voltage to a power generator so as to supply power of the power generator to the power system. In this matrix converter, a filter may be provided on the power system side. In this case, leading current of a capacitor included in the filter may cause difficulty in maintaining the power factor on the power system side at 1.

An aspect of the embodiment has been made in view of the above-described circumstances. It is an object of the present disclosure to provide a series multiplex matrix converter, a power generation system, and a method for controlling a power factor that appropriately control the power factor on the power system side.

SUMMARY

According to one aspect of the present disclosure, a series multiplex matrix converter includes a power converter and a controller. The power converter is disposed between a power system and a rotating electric machine, and includes a plurality of power conversion cells connected in series to each other. The controller is configured to control at least one power conversion cell among the plurality of power conversion cells to cause a current to flow from the at least one power conversion cell toward the rotating electric machine, and configured to control a rest of the plurality of power conversion cells to cause the current flowing toward the rotating electric machine to flow from the rest of the plurality of power conversion cells toward the power system as a reactive current.

The aspect of the embodiment provides a series multiplex matrix converter, a power generation system, and a method for controlling the power factor that appropriately control a power factor on the power system side.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

FIG. 1 is a schematic diagram illustrating an exemplary configuration of a power generation system according to an embodiment;
FIG. 2 is a schematic diagram illustrating an exemplary configuration of a single phase power conversion cell unit;
FIG. 3 is a schematic diagram illustrating an exemplary bidirectional switch;
FIG. 4 is a graph illustrating an exemplary relationship of rotation speed with active power, reactive power, and system-side power factor with input power factor angle being adjusted;
FIG. 5 is a schematic diagram illustrating an example of a main controller's control of the system-side power factor in a first mode;
FIG. 6 is a schematic diagram illustrating an exemplary configuration of the main controller;
FIG. 7 is a schematic diagram illustrating an exemplary configuration of a cell controller;
FIG. 8 is a schematic diagram illustrating an exemplary configuration of a power factor setter;
FIG. 9 is a graph illustrating exemplary switching among voltages output to a rotating electric machine; and
FIG. 10 is a flowchart of exemplary processing performed by the controller.

DESCRIPTION OF THE EMBODIMENTS

A series multiplex matrix converter, a power generation system, and a method for controlling a power factor according to embodiments will be described in detail below with reference to the accompanying drawings. The following embodiments are provided for exemplary purposes only and are not intended to limit the present disclosure.

1. Power Generation System

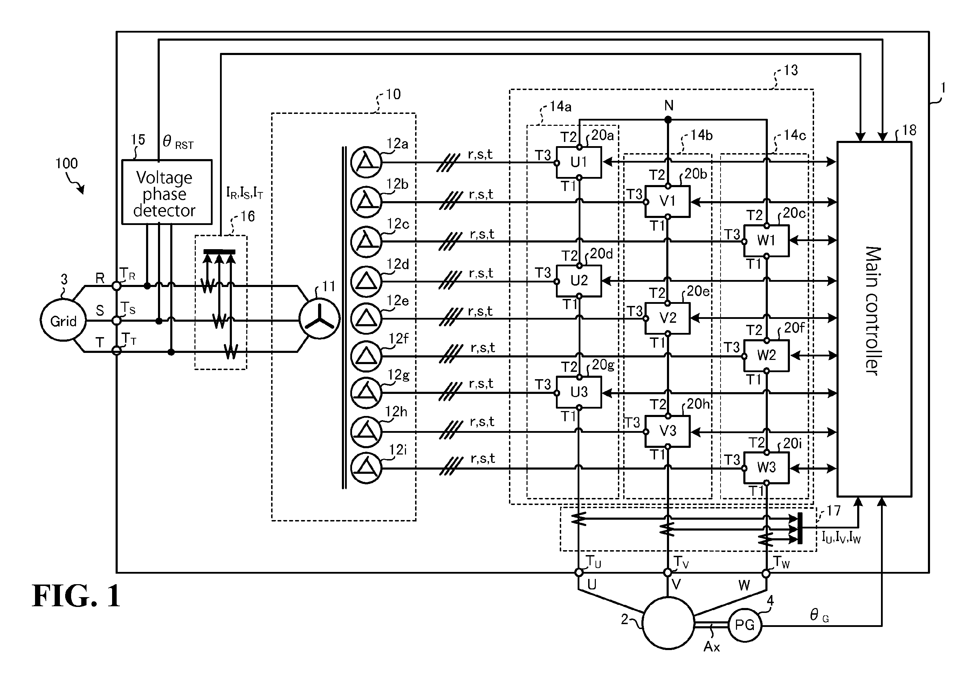

FIG. 1 is a schematic diagram illustrating an exemplary configuration of the power generation system according to the embodiment. As illustrated in FIG. 1, a power generation system 100 according to the embodiment includes a series multiplex matrix converter 1 and a rotating electric machine 2. The series multiplex matrix converter 1 is disposed between the rotating electric machine 2 and a three-phase AC (Alternating-Current) power system 3 to perform power conversion between the rotating electric machine 2 and the power system 3.

In this embodiment, an AC generator (ACG) such as a synchronous motor will be described as an example of the rotating electric machine 2. The rotating electric machine 2, however, will not be limited to the AC generator. Another possible example is an AC motor. A position detector 4 is disposed on a rotation shaft Ax of the rotating electric machine 2. The position detector 4 detects rotation position $\theta_G$, which represents the rotor position (machine angle) of the rotating electric machine 2. The rotation position $\theta_G$ detected by the position detector 4 is input into the series multiplex matrix converter 1.

2. Series Multiplex Matrix Convertor 1

By referring to FIG. 1, an exemplary configuration of the series multiplex matrix converter 1 will be described. In the following description, a controller of the series multiplex matrix converter 1 is divided into a main controller and cell controllers for the convenience of description. Alternatively, the cell controllers may be incorporated in the main controller. The cell controllers may perform part of the processing performed by the main controller in this embodiment. The main controller may perform part of the processing performed by the cell controllers in this embodiment.

As illustrated in FIG. 1, the series multiplex matrix converter 1 includes a multiplex converter 10, a power converter 13, a voltage phase detector 15, current detectors 16 and 17, a main controller 18, terminals TR, TS, and TT, and terminals TU, TV, and TW. The rotating electric machine 2 is connected to the terminals TU, TV, and TW. The power system 3 is connected to the terminals TR, TS, and TT.

The multiplex converter 10 includes a primary winding 11 and nine secondary windings 12a to 12i (hereinafter occasionally collectively referred to as secondary windings 12). The power system 3 inputs three-phase AC voltage into the primary winding 11. The multiplex converter 10 converts the three-phase AC voltage for the nine secondary windings 12a to 12i, from which the converted three-phase AC voltage is output.

An example of the multiplex converter 10 is a phase shifting converter that causes a voltage phase difference to occur between some of the secondary windings 12 that correspond to an identical output phase. For example, the secondary windings 12d to 12f, which respectively correspond to positions U2, V2, and W2, have a voltage phase difference of 20 degrees from the secondary windings 12a to 12c, which respectively correspond to positions U1, V1, and W1. The secondary windings 12g to 12i, which respectively correspond to positions U3, V3, and W3, have a voltage phase difference of 40 degrees from the secondary windings 12a to 12c, which respectively correspond to the positions U1, V1, and W1. Providing such voltage phase differences decreases harmonics current flowing toward the primary winding 11. It is noted that the multiplex converter 10 will not be limited to the phase shifting converter.

The power converter 13 includes single-phase power conversion cell unit groups 14a to 14c (hereinafter occasionally collectively referred to as single-phase power conversion cell unit groups 14). One end of each of the single-phase power conversion cell unit groups 14a to 14c is connected to a neutral N. The other ends of the single-phase power conversion cell unit groups 14a to 14c are respectively connected to the U phase, the V phase, and the W phase of the rotating electric machine 2.

The single-phase power conversion cell unit group 14a includes single-phase power conversion cell units 20a, 20d, and 20g. The single-phase power conversion cell units 20a, 20d, and 20g are respectively connected to the secondary windings 12a, 12d, and 12g. The outputs of the single-phase power conversion cell units 20a, 20d, and 20g are connected in series to each other. A terminal T2 of the single-phase power conversion cell unit 20a is connected to the neutral N. A terminal T1 of the single-phase power conversion cell unit 20g is connected to the U phase of the rotating electric machine 2.

The single-phase power conversion cell unit group 14b includes single-phase power conversion cell units 20b, 20e, and 20h. The single-phase power conversion cell units 20b, 20e, and 20h are respectively connected to the secondary windings 12b, 12e, and 12h. The outputs of the single-phase power conversion cell units 20b, 20e, and 20h are connected in series to each other. A terminal T2 of the single-phase power conversion cell unit 20b is connected to the neutral N. A terminal T1 of the single-phase power conversion cell unit 20h is connected to the V phase of the rotating electric machine 2.

The single-phase power conversion cell unit group 14c includes single-phase power conversion cell units 20c, 20f, and 20i. The single-phase power conversion cell units 20c, 20f, and 20i are respectively connected to the secondary windings 12c, 12f, and 12i. The outputs of the single-phase power conversion cell units 20c, 20f, and 20i are connected in series to each other. A terminal T2 of the single-phase power conversion cell unit 20c is connected to the neutral N. A terminal T1 of the single-phase power conversion cell unit 20i is connected to the W phase of the rotating electric machine 2.

The single-phase power conversion cell units 20 each include terminals T3 (Tr, Ts, and Tt, described later), and the terminals T1 and T2. Three-phase AC voltage is input into the terminal T3 through the secondary winding 12. The single-phase power conversion cell unit 20 converts the three-phase AC voltage into single phase AC voltage and outputs the single phase AC voltage from the terminals T1 and T2.

For example, the single-phase power conversion cell unit group 14a outputs a sum of the output voltages from the single-phase power conversion cell units 20a, 20d, and 20g to the U phase of the rotating electric machine 2. The single-phase power conversion cell unit group 14b outputs a sum of the output voltages from the single-phase power conversion cell units 20b, 20e, and 20h to the V phase of the rotating electric machine 2. The single-phase power conversion cell unit group 14c outputs a sum of the output voltages from the single-phase power conversion cell units 20c, 20f, and 20i to the W phase of the rotating electric machine 2.

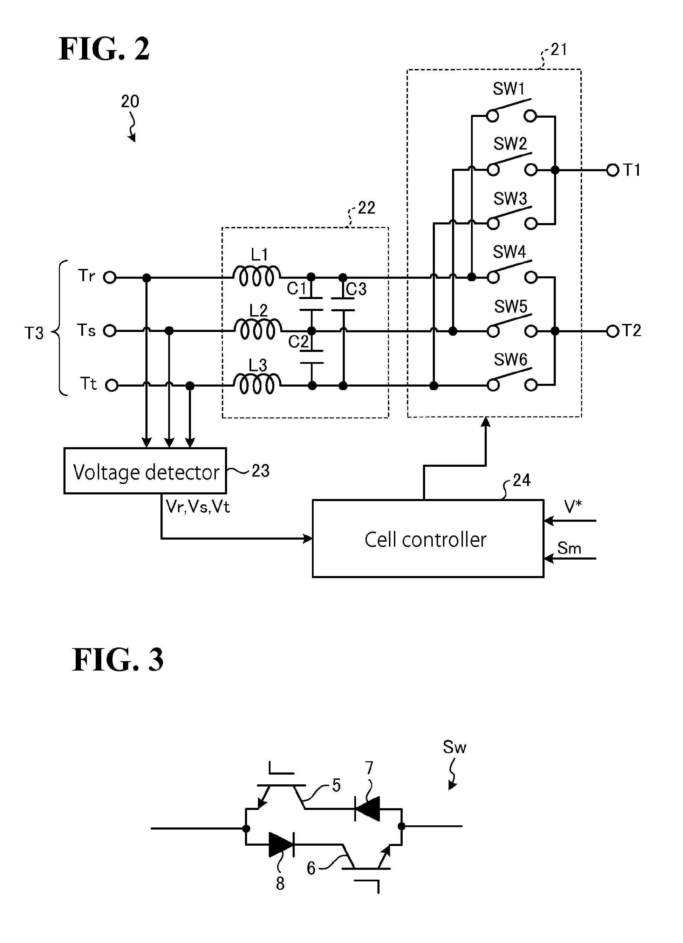

FIG. 2 is a schematic diagram illustrating an exemplary configuration of the single-phase power conversion cell unit 20. As illustrated in FIG. 2, the single-phase power conversion cell unit 20 includes a single-phase power conversion cell 21 (which is an example of the power conversion cell), a filter 22, a voltage detector 23, and a cell controller 24.

The single-phase power conversion cell 21 includes bidirectional switches Sw1 to Sw6 (hereinafter occasionally collectively referred to as bidirectional switches Sw). The bidirectional switches Sw1 to Sw6 are connected between the terminals T1 and T2, and the terminals Tr, Ts, and Tt (terminals T3) through the filter 22.

The bidirectional switch Sw has an exemplary configuration illustrated in FIG. 3. FIG. 3 is a schematic diagram illustrating the exemplary configuration of the bidirectional switch Sw. As illustrated in FIG. 3, the bidirectional switch Sw includes a series connector made up of a switching element 5 and a diode 7 and a series connector made up of a switching element 6 and a diode 8. The two series connectors are oriented in opposite directions and connected in parallel to each other.

Examples of the switching elements 5 and 6 include, but are not limited to, semiconductor switching elements such as Metal-Oxide-Semiconductor Field-Effect Transistors (MOSFET) and Insulated Gate Bipolar Transistors (IGBT). Alternatively, the switching elements 5 and 6 may be next-generation semiconductor switching elements such as SiC and GaN.

The switching elements 5 and 6 will not be limited to the configuration illustrated in FIG. 3. For example, while in the example illustrated in FIG. 3 the cathodes of the diodes 7 and 8 are not connected to each other, the bidirectional switch Sw may have a configuration in which the cathodes of the diodes 7 and 8 are connected to each other. In the case where the switching elements 5 and 6 are reverse blocking IGBTs, it is not necessary to provide the diodes 7 and 8.

The filter 22 is disposed between the single-phase power conversion cell 21 and the terminals Tr, Ts, and Tt. The single-phase power conversion cell 21 generates a high frequency component. The filter 22 suppresses the influence of the high frequency component on the power system 3. The filter 22 includes three reactors L1, L2, and L3 and three capacitors C1, C2, and C3.

It is noted that the filter 22 will not be limited to the LC filter configuration illustrated in FIG. 2.

The voltage detector 23 is disposed between the multiplex converter 10 and the filter 22, and detects instantaneous voltage values $Vr, Vs,$ and $Vt$ of the respective phases (the r phase, the s phase, and the t phase) of the secondary winding 12 (hereinafter referred to as system-side voltages $Vr, Vs,$ and $Vt$).

The cell controller 24 controls the bidirectional switches Sw1 to Sw6 of the single-phase power conversion cell 21 based on a control signal from the main controller 18. Thus, the single-phase power conversion cell 21 converts the three-phase AC voltage input from the terminals T3 into single phase AC voltage, and outputs the single phase AC voltage from the terminals T1 and T2. The cell controller 24 will be described in detail later.

By referring back to FIG. 1, the configuration of the series multiplex matrix converter 1 will be further described. The voltage phase detector 15 is disposed between the power system 3 and the multiplex converter 10, and detects voltage phase $\theta_{RST}$ of the power system 3 (hereinafter referred to as system-side voltage phase $\theta_{RST}$).

The current detector 16 is disposed between the power system 3 and the multiplex converter 10, and detects instantaneous current values $I_R, IS,$ and $IT$ of currents respectively flowing between the R phase, the S phase, and the T phase of the power system 3 and the multiplex converter 10 (hereinafter referred to as system-side currents $I_R, IS,$ and $I_T$). An example of the current detector 16 is a current sensor that detects current using Hall elements, which are magneto-electric conversion elements.

The current detector 17 is disposed between the power converter 13 and the rotating electric machine 2, and detects instantaneous current values $I_U, I_V,$ and $I_W$ of currents flowing respectively between the power converter 13 and the U phase, the V phase, and the W phase of the rotating electric machine 2 (hereinafter referred to as machine-side currents $I_U, I_V,$ and $I_W$). An example of the current detector 17 is a current sensor that detects current using Hall elements, which are magneto-electric conversion elements.

The main controller 18 controls each of the single-phase power conversion cell units 20. For example, the main controller 18 controls each single-phase power conversion cell unit 20 based on the rotation position $\theta_G$, the system-side currents $I_R, IS,$ and $I_T$, the system-side voltage phase $\theta_{RST}$, and the machine-side currents $I_U, I_V,$ and $I_W$.

The main controller 18 controls a power factor $\lambda grid$ on the power system 3 side (hereinafter referred to as system-side power factor $\lambda grid$) in two control modes, namely, a first mode and a second mode. Based on a rotation speed $\omega_G$ of the rotating electric machine 2, the main controller 18 selects a control mode from between the first mode and the second mode, and controls the system-side power factor $\lambda grid$ in the selected control mode. This ensures that the main controller 18 appropriately controls the system-side power factor $\lambda grid$. The main controller 18 calculates the rotation speed $\omega_G$ based on the rotation position $\theta_G$. The system-side power factor $\lambda grid$ is a power factor angle of power supplied from the series multiplex matrix converter 1 to the power system 3 side, and is a power factor as seen from the power system 3 side.

In the first mode, the main controller 18 regulates an input power factor angle $\theta in$ to control the system-side power factor $\lambda grid$. The input power factor angle $\theta in$ is a power factor angle of power supplied from the single-phase power conversion cell 21 to the power system 3 side. At a low rotation speed $\omega_G$ of the rotating electric machine 2, it may be difficult to regulate the system-side power factor $\lambda grid$ by merely regulating the input power factor angle $\theta in$. This will be described in detail below.

In the series multiplex matrix converter 1, the filter 22 is disposed between each of the single-phase power conversion cells 21 and the power system 3, as illustrated in FIG. 2. The filter 22 causes a leading reactive current to flow through the power system 3, thereby generating a leading reactive power $Qini$. At a low rotation speed $\omega_G$ of the rotating electric machine 2, even though the input power factor angle $\theta in$ is changed, a lagging reactive current to cancel the leading reactive power $Qini$ may be hindered from flowing from the single-phase power conversion cell 21 toward the power system 3.

For example, generation power $P_G$ supplied from the rotating electric machine 2 to the series multiplex matrix converter 1, reactive power $Qgrid$ supplied from the series multiplex matrix converter 1 to the power system 3, input power factor angle $\theta in$, and leading reactive power $Qini$ satisfy the following Formula (1). It is noted that losses in the multiplex converter 10 and the power converter 13 are negligible.

$$Qgrid = PG \times \tan(\theta in) - Qini \quad \dots \quad (1)$$

At a low rotation speed $\omega_G$ of the rotating electric machine 2, the generation power $P_G$ is small. Hence, regulating the input power factor angle $\theta in$ may not make $PG \times \tan(\theta in)$ exceed the leading reactive power $Qini$ in Formula (1). In this case, the reactive power $Qgrid$ is negative. This causes difficulty in controlling the system-side power factor $\lambda grid$ to be "1" or lagging power factor by the regulation of the input power factor angle $\theta in$.

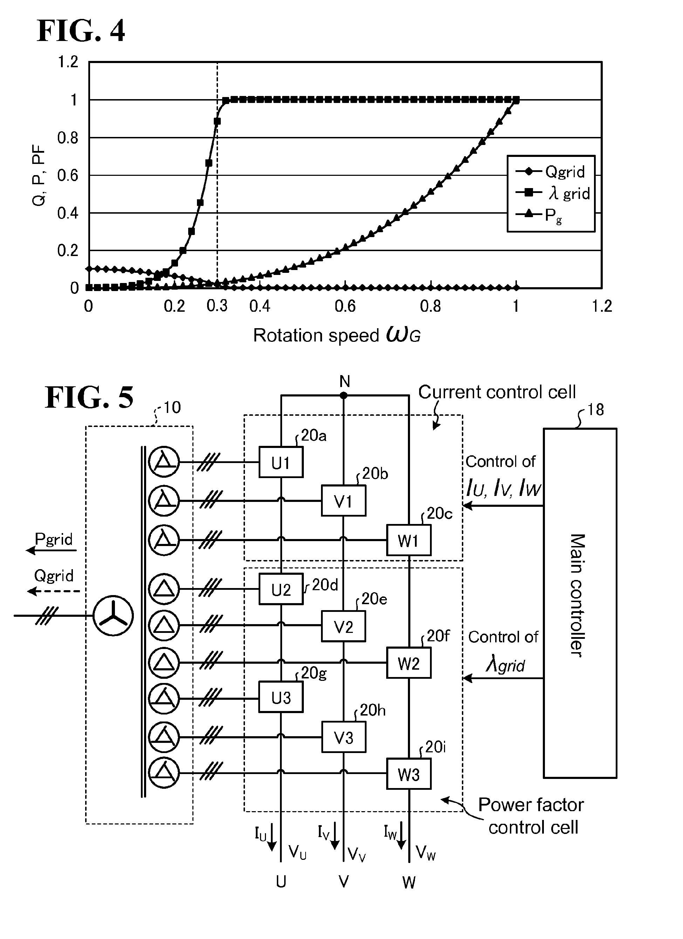

FIG. 4 is a graph illustrating an exemplary relationship of the rotation speed $\omega_G$ with the generation power (active power) PG, the reactive power $Qgrid$, and the system-side power factor $\lambda grid$ with the input power factor angle $\theta in$ being regulated. As illustrated in FIG. 4, in the power factor control to regulate the input power factor angle $\theta in$, the system-side power factor $\lambda grid$ is "1" when the rotation speed $\omega_G$ is equal to or higher than approximately 31 % of the rated rotation speed of the rotating electric machine 2. In contrast, the system-side power factor $\lambda grid$ is not "1" when the rotation speed $\omega_G$ is lower than approximately 31 % of the rated rotation speed of the rotating electric machine 2.

In view of this, when the rotation speed $\omega_G$ of the rotating electric machine 2 is equal to or higher than a predetermined threshold $\omega th$ (which is an example of the first threshold and the second threshold), the main controller 18 controls the system-side power factor $\lambda grid$ in the first mode. When the rotation speed $\omega_G$ of the rotating electric machine 2 is lower than the threshold $\omega th$, the main controller 18 controls the system-side power factor $\lambda grid$ in the second mode.

The threshold $\omega th$ is set to be higher than such a rotation speed $\omega_G$ that is necessary for acquiring generation power $P_G$ that makes the reactive power $Qgrid$ zero by regulating the input power factor angle $\theta in$ in Formula (1). When the series multiplex matrix converter 1 has the property illustrated in FIG. 4 as a result of regulating the input power factor angle $\theta in$, the threshold $\omega th$ is set in an exemplary range of 31% to 33% of the rated speed of the rotating electric machine 2.

It is noted that the main controller 18 changes the threshold at which to change the modes between when the rotation speed $\omega_G$ of the rotating electric machine 2 increases and when the rotation speed $\omega_G$ of the rotating electric machine 2 decreases. For example, when the rotation speed $\omega_G$ of the rotating electric machine 2 increases and when the rotation speed $\omega_G$ is lower than a threshold $\omega th1$ (which is an example of the first threshold), the main controller 18 selects the second mode. When the rotation speed $\omega_G$ is equal to or higher than the threshold $\omega th1$, the main controller 18 changes the second mode to the first mode.

When the rotation speed $\omega_G$ of the rotating electric machine 2 decreases and when the rotation speed $\omega_G$ is equal to or higher than a threshold $\omega th2$ (which is an example of the second threshold), the main controller 18 selects the first mode. When the rotation speed $\omega_G$ is lower than the threshold $\omega th2$, the main controller 18 changes the first mode to the second mode. It is noted that the thresholds $\omega th1$ and $\omega th2$ are set to satisfy the relationship: $\omega th2 < \omega th1$.

The plurality of single-phase power conversion cells 21 are connected in series to each other for each of the U phase, the V phase, and the W phase. In the second mode, the main controller 18 divides the plurality of single-phase power conversion cells 21 into single-phase power conversion cells 21 in charge of current control on the rotating electric machine 2 side and single-phase power conversion cells 21 in charge of control of the system-side power factor $\lambda grid$. In the following description, the single-phase power conversion cells 21 in charge of current control on the rotating electric machine 2 side will be occasionally referred to as current control cells, and the single-phase power conversion cells 21 in charge of control of the system-side power factor $\lambda grid$

will be occasionally referred to as power factor control cells.

For example, in the second mode, the main controller 18 controls some of the plurality of single-phase power conversion cells 21, which are connected in series to each other, so as to cause current to flow from the some of the plurality of single-phase power conversion cells 21 toward the rotating electric machine 2. Also in the second mode, the main controller 18 controls the rest of the plurality of single-phase power conversion cells 21 so as to cause the current flowing toward the rotating electric machine 2 to flow from the rest of the plurality of single-phase power conversion cells 21 toward the power system 3 as reactive current. In this manner, the main controller 18 controls the system-side power factor $\lambda grid$ to be "1" or lagging power factor.

FIG. 5 is a schematic diagram illustrating an example of the main controller 18's control of the system-side power factor $\lambda grid$ in the second mode. In the example illustrated in FIG. 5, the main controller 18 controls the single-phase power conversion cells 21 of the single-phase power conversion cell units 20a to 20c, which are in the first stage, so as to cause current to flow from the single-phase power conversion cells 21 of the single-phase power conversion cell units 20a to 20c toward the rotating electric machine 2.

Also, the main controller 18 controls the single-phase power conversion cells 21 of the single-phase power conversion cell units 20d to 20i in the second and third stages so as to cause the current flowing toward the rotating electric machine 2 to flow from the single-phase power conversion cells 21 of the single-phase power conversion cell units 20d to 20i toward the power system 3 as reactive current.

In this manner, for each of the U phase, the V phase, and the W phase, the main controller 18 divides the plurality of single-phase power conversion cells 21 into current control cells and power factor control cells, and controls the current control cells and the power factor control cells separately. Thus, even when the rotation speed $\omega_G$ of the rotating electric machine 2 is lower than the threshold $\omega th$, the main controller 18 accurately controls the system-side power factor $\lambda grid$.

For example, when the power generation system 100 is a wind power generation system, the rotating electric machine 2 is connected to a rotor (such as a propeller of a wind mill). In this case, when the wind is weak, the rotation speed of the rotor is low. Consequently, the rotation speed $\omega_G$ of the rotating electric machine 2 is low. Even in this case, however, the power generation system 100 causes the current flowing from the current control cells toward the rotating electric machine 2 to flow from the power factor control cells toward the power system 3 as reactive current. In this manner, the power generation system 100 controls the system-side power factor $\lambda grid$. This ensures accurate regulation of the system-side power factor $\lambda grid$. For example, the system-side power factor $\lambda grid$ can be made to accord with a power factor required by the power system 3 side.

3. Configuration of Main Controller 18

The main controller 18 will be further described. While in the following description the main controller 18 performs the control illustrated in FIG. 5, the number of the current control cells and the number of the power factor control cells will not be limited to the example illustrated in FIG. 5.

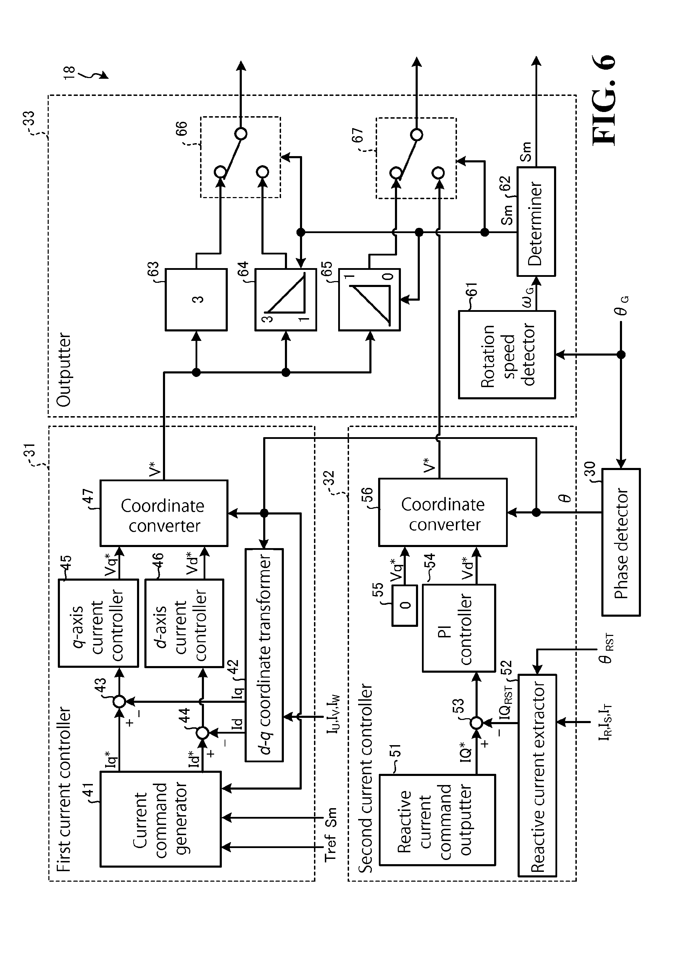

FIG. 6 is a schematic diagram illustrating an exemplary configuration of the main controller 18. As illustrated in FIG. 6, the main controller 18 includes a phase detector 30, a first current controller 31, a second current controller 32, and an outputter 33.

The main controller 18 is implemented by a microcomputer including, for example, a central processing unit (CPU), a read only memory (ROM), a random access memory (RAM), and input/output ports, or an integrated circuit such as an application specific integrated circuit (ASIC) and a field programmable gate array (FPGA).

The CPU of the microcomputer reads and executes a program stored in the ROM to implement part or all of the functions of the phase detector 30, the first current controller 31, the second current controller 32, and the outputter 33. Alternatively, the integrated circuit such as the ASIC and the FPGA may perform part or all of the functions of the phase detector 30, the first current controller 31, the second current controller 32, and the outputter 33.

For example, the phase detector 30 multiplies the rotation position $\theta_G$, which has been detected by the position detector 4, by the number of poles of the rotating electric machine 2. In this manner, the phase detector 30 detects an electrical angle phase $\theta$ of the rotating electric machine 2.

The first current controller 31 generates a voltage command $V^*$ to cause current to flow from the single-phase power conversion cells 21 toward the rotating electric machine 2. The first current controller 31 includes a current command generator 41, a d-q coordinate converter 42, subtractors 43 and 44, a q-axis current controller 45, a d-axis current controller 46, and a coordinate converter 47.

The current command generator 41 generates a q-axis current command $Iq^*$ and a d-axis current command $Id^*$. The q-axis current command $Iq^*$ is a target value of torque current caused to flow toward the rotating electric machine 2. The d-axis current command $Id^*$ is a target value of exciting current caused to flow toward the rotating electric machine 2.

The current command generator 41 generates a q-axis current command $Iq^*$ that corresponds to a torque command $T^*$, for example. The current command generator 41 uses, for example, a torque-current scale factor $K$ to calculate the q-axis current command $Iq^*$ corresponding to the torque command $T^*$.

For example, when mode information Sm indicates the first mode (for example, "0"), the current command generator 41 sets the *d*-axis current command *Id\** at a predetermined value (for example, zero). When the mode information Sm indicates the second mode (for example, "1"), the current command generator 41 generates such a *d*-axis current command *Id\** that the current flowing toward the rotating electric machine 2 is rated current.

The *d-q* coordinate converter 42 converts, for example, machine-side currents $I_U$, $I_V$, and $I_W$ into $\alpha$-$\beta$ components, which are coordinates of a fixed coordinate system defined by two perpendicular axes. Based on the electrical angle phase $\theta$, the *d-q* coordinate converter 42 converts the components of the $\alpha$-$\beta$ axis coordinate system into components of a *d-q* axis coordinate system so as to calculate a *d*-axis current *Id* and a *q*-axis current *Iq*. The *d* axis is an axis parallel to the magnetic flux of the rotating electric machine 2, and the *q* axis is an axis perpendicular to the d axis.

The subtractor 43 subtracts the *q*-axis current *Iq* from the *q*-axis current command *Iq\**. The subtractor 44 subtracts the *d*-axis current *Id* from the *d*-axis current command *Id\**. An example of the *q*-axis current controller 45 is a proportional integral (PI) controller. By proportional integral control, the *q*-axis current controller 45 generates such a *q*-axis voltage command *Vq\** that makes the deviation between the *q*-axis current command *Iq\** and the *q*-axis current *Iq* zero.

An example of the *d*-axis current controller 46 is a PI controller. By proportional integral control, the *d*-axis current controller 46 generates such a *d*-axis voltage command *Vd\** that makes the deviation between the *d*-axis current command *Id\** and the *d*-axis current *Id* zero. Instead of the PI controllers, the *q*-axis current controller 45 and the *d*-axis current controller 46 may be PID controllers, for example.

Based on the *q*-axis voltage command *Vq\** of the *q*-axis current controller 45 and based on the *d*-axis voltage command *Vd\** of the *d*-axis current controller 46, the coordinate converter 47 calculates an amplitude *M* of the voltage command and a phase command $\theta a^*$. The coordinate converter 47 calculates the amplitude *M* of the voltage command using the following exemplary Formula (2), and calculates the phase command $\theta a^*$ using the following exemplary Formula (3):

$$M = (Vd^{*2} + Vq^{*2})^{1/2} \quad \dots \quad (2)$$

$$\theta a^* = \tan^{-1} (Vq^* / Vd^*) \quad \dots \quad (3)$$

The coordinate converter 47 generates the voltage command *V\** based on the amplitude *M* of the voltage command, the phase command $\theta a^*$, and the electrical angle phase $\theta$. The voltage command *V\** includes, for example, a voltage command *Vu\** for the U phase, a voltage command *Vv\** for the V phase, and a voltage command *Vw\** for the W phase. The coordinate converter 47 calculates the voltage commands *Vu\**, *Vv\**, and *Vw\** using the following exemplary Formulae (4) to (6):

$$Vu^* = M \times \sin (\theta + \theta a^*) \quad \dots \quad (4)$$

$$Vv^* = M \times \sin (\theta + \theta a^* - 2\pi / 3) \quad \dots \quad (5)$$

$$Vw^* = M \times \sin (\theta + \theta a^* + 2\pi / 3) \quad \dots \quad (6)$$

The second current controller 32 generates a voltage command *V\** to cause reactive current to flow from the single-phase power conversion cells 21 toward the power system 3. The second current controller 32 includes a reactive current command outputter 51, a reactive current extractor 52, a subtractor 53, a PI controller 54, a *q*-axis voltage command generator 55, and a coordinate converter 56.

The reactive current command outputter 51 outputs a reactive current command *Iq\** (which is an example of the target value). For example, when the reactive current command *Iq\** is zero, the second current controller 32 generates such a voltage command *V\** that makes the system-side power factor $\lambda grid$ "1".

When the target system-side power factor $\lambda grid$ (hereinafter referred to as target power factor) is other than "1", the reactive current command outputter 51 regards, for example, the value of the reactive current *Iq* on the power system 3 side corresponding to the target power factor as the reactive current command *Iq\**. For example, when the target power factor is set, the reactive current command outputter 51 regards the value of the reactive current *Iq* on the power system 3 side corresponding to the target power factor as the reactive current command *Iq\** based on the set target power factor and the generation power PG. The reactive current command outputter 51 detects or estimates the generation power $P_G$ from, for example, the amplitude *M* and the *q*-axis current command *Iq\**.

The reactive current extractor 52 extracts reactive current $Iq_{RST}$ included in the system-side currents $I_R$, $IS$, and $I_T$ based on the system-side voltage phase $\theta_{RST}$. For example, the reactive current extractor 52 detects effective values of the system-side currents $I_R$, $I_S$, and $I_T$, and calculates the reactive current $Iq_{RST}$ using the following Formula (7). Alternatively, the reactive current extractor 52 may acquire a result of an estimation performed using an observer as a detection value of the reactive current $Iq_{RST}$.

$$IQ_{RST} = I_{RST} \times \sin (\theta_{RST}) \quad \dots \quad (7)$$

The subtractor 53 subtracts the reactive current $Iq_{RST}$ from the reactive current command $Iq^*$. By proportional integral control, the PI controller 54 generates such a $d$-axis voltage command $Vd^*$ that makes the deviation between the reactive current command $Iq^*$ and the reactive current $Iq_{RST}$ zero. The $q$-axis voltage command generator 55 generates a $q$-axis voltage command $Vq^*$ equal to zero. The second current controller 32 may include, for example, a PID controller in place of the PI controller 54.

The coordinate converter 56 performs processing similar to the processing of the coordinate converter 47 based on the $q$-axis voltage command $Vq^*$ of the $q$-axis voltage command generator 55, the $d$-axis voltage command $Vd^*$ of the PI controller 54, and the electrical angle phase $\theta$. In this manner, the coordinate converter 56 generates the voltage command $V^*$, which includes the voltage commands $Vu^*$, $Vv^*$, and $Vw^*$.

In the first mode, the outputter 33 outputs the voltage command $V^*$ of the second current controller 32 to the cell controllers 24, which control the respective single-phase power conversion cells 21. This causes torque current corresponding to the torque command $T^*$ to be supplied from the cell controller 24 to the rotating electric machine 2.

In the second mode, the outputter 33 outputs the voltage command $V^*$ of the first current controller 31 to some of the cell controllers 24, and outputs the voltage command $V^*$ of the second current controller 32 to the rest of the cell controllers 24.

For example, in the second mode, the outputter 33 outputs the voltage command $V^*$ of the first current controller 31 to the cell controllers 24 of the single-phase power conversion cell units 20a to 20c, which are in the first stage. Also in the second mode, the outputter 33 outputs the voltage command $V^*$ of the second current controller 32 to the cell controllers 24 of the single-phase power conversion cell units 20d to 20i in the second and third stages.

This will be described in detail by referring to the U phase. Based on the voltage command $V^*$ of the first current controller 31, the single-phase power conversion cell unit 20a, which is in the first stage, causes current to flow from the single-phase power conversion cell 21 to the U phase of the rotating electric machine 2. The current includes torque current corresponding to the torque command $T^*$, and exciting current that flows to cause the current flowing toward the U phase of the rotating electric machine 2 to be rated current.

Based on the voltage command $V^*$ of the second current controller 32, the single-phase power conversion cell units 20d and 20g, which are respectively in the second and third stages, cause reactive current to flow from the single-phase power conversion cells 21 toward the power system 3. Thus, the exciting current flowing from the single-phase power conversion cell 21 of the single-phase power conversion cell unit 20a, which is in the first stage, to the U phase of the rotating electric machine 2 flows as reactive current from the single-phase power conversion cells 21 of the single-phase power conversion cell units 20d and 20g, which are respectively in the second and third stages, toward the power system 3.

Similarly, for the V phase (or the W phase), based on the voltage command $V^*$ of the first current controller 31, the single-phase power conversion cell unit 20b (20c), which is in the first stage, causes current to flow from the single-phase power conversion cell 21 to the V phase (W phase) of the rotating electric machine 2. Based on the voltage command $V^*$ of the second current controller 32, the single-phase power conversion cell units 20e and 20h (20f and 20i), which are respectively in the second and third stages, cause reactive current to flow from the single-phase power conversion cells 21 toward the power system 3.

Thus, the exciting current flowing from the single-phase power conversion cell 21 of the single-phase power conversion cell unit 20b (20c), which is in the first stage, to the V phase (W phase) of the rotating electric machine 2 flows as reactive current from the single-phase power conversion cells 21 of the single-phase power conversion cell units 20e and 20h (20f and 20i), which are respectively in the second and third stages, toward the power system 3.

In this manner, for each of the U phase, the V phase, and the W phase, the main controller 18 divides the plurality of single-phase power conversion cells 21 into the single-phase power conversion cells 21 in charge of current control on the rotating electric machine 2 side and the single-phase power conversion cells 21 in charge of power factor control on the power system 3 side. The main controller 18 controls the current control cells and the power factor control cells separately. This ensures that the main controller 18 accurately controls the system-side power factor $\lambda grid$.

The outputter 33 includes a rotation speed detector 61, a determiner 62, an amplifier 63, variable amplifiers 64 and 65, and switches 66 and 67. The rotation speed detector 61 detects the rotation speed $\omega_G$ of the rotating electric machine 2 based on the rotation position $\theta_G$. For example, the rotation speed detector 61 obtains the rotation speed $\omega_G$ by differentiating the rotation position $\theta_G$.

The determiner 62 determines whether the rotation speed $\omega_G$ is at a predetermined threshold $\omega th$. When the determiner 62 determines that the rotation speed $\omega_G$ is equal to or higher than the predetermined threshold $\omega th$, the determiner 62 outputs mode information Sm indicating the first mode to the variable amplifiers 64 and 65 and to the switches 66 and 67.

When the determiner 62 determines that the rotation speed $\omega_G$ is lower than the predetermined threshold $\omega th$, the determiner 62 outputs mode information Sm indicating the second mode to the variable amplifiers 64 and 65 and to the switches 66 and 67. As described above, the threshold $\omega th$ is set at a value that, for example, is larger than such a rotation speed $\omega_G$ that is necessary for acquiring generation power $P_G$ that makes the reactive power $Qgrid$ zero by regulating the input power factor angle $\theta in.$

When the determiner 62 determines that the rotation speed $\omega_G$ is lower than the predetermined threshold $\omega th,$ the determiner 62 outputs mode information Sm indicating the second mode to the single-phase power conversion cell units 20 in charge of control of the system-side power factor $\lambda grid$ in the second mode. When the determiner 62 determines that the rotation speed $\omega_G$ is equal to or higher than the predetermined threshold $\omega th,$ the determiner 62 outputs mode information Sm indicating the first mode to the single-phase power conversion cell units 20 in charge of control of the system-side power factor $\lambda grid$ in the second mode.

Irrespective of whether the rotation speed $\omega_G$ is lower than the predetermined threshold $\omega th,$ the determiner 62 outputs mode information Sm indicating the first mode to the single-phase power conversion cell units 20 in charge of current control in the second mode.

The amplifier 63 amplifies threefold the voltage command $V^*$ of the first current controller 31. This ensures that suitable voltage is output to each of the phases of the rotating electric machine 2 in the second mode.

For example, in the first mode, the single-phase power conversion cells 21 of the single-phase power conversion cell units 20a to 20i in the first to third stages implement the function to output voltage to each of the phases of the rotating electric machine 2. In the second mode, in the state illustrated in FIG. 5, it is the single-phase power conversion cells 21 of the single-phase power conversion cell units 20a to 20c, which are in the first stage, that implement the function to output voltage to each of the phases of the rotating electric machine 2. In view of this, so as to make the voltage in the second mode three times larger than the voltage output in the first mode, the amplifier 63 amplifies threefold the voltage command $V^*$ of the first current controller 31.

So as to smoothly switch between the first mode and the second mode, the variable amplifiers 64 and 65 gradually change the amplifying rate with respect to the voltage command $V^*$ at the time of switching between the first mode and the second mode. This reduces shock at the time of mode switching.

For example, when the mode information Sm is changed from indication of the second mode to indication of the first mode, the variable amplifier 64 changes the amplifying rate gradually from threefold to onefold with respect to the voltage command $V^*$ of the first current controller 31 in a predetermined period of time $T1.$ When mode information Sm is changed from indication of the first mode to indication of the second mode, the variable amplifier 64 changes the amplifying rate gradually from onefold to threefold in the predetermined period of time $T1.$

When the mode information Sm is changed from indication of the second mode to indication of the first mode, the variable amplifier 65 changes the amplifying rate gradually from zerofold to onefold with respect to the voltage command $V^*$ of the first current controller 31 in the predetermined period of time $T1.$ When the mode information Sm is changed from indication of the first mode to indication of the second mode, the variable amplifier 65 changes the amplifying rate gradually from onefold to zerofold in the predetermined period of time $T1.$

When the mode information Sm indicates the first mode, the switch 66 outputs the voltage command $V^*$ of the first current controller 31 amplified by the variable amplifier 64. When the mode information Sm indicates the second mode, the switch 66 outputs the voltage command $V^*$ of the first current controller 31 amplified by the amplifier 63.

When the mode information Sm indicates the first mode, the switch 67 outputs the voltage command $V^*$ of the second current controller 32. When the mode information Sm indicates the second mode, the switch 67 outputs the voltage command $V^*$ of the first current controller 31 amplified by the variable amplifier 65.

The cell controller 24 of the single-phase power conversion cell unit 20 controls the single-phase power conversion cell 21 based on the voltage command $V^*$ output from the main controller 18. The cell controller 24 will be described in detail below.

4. Cell Controller 24

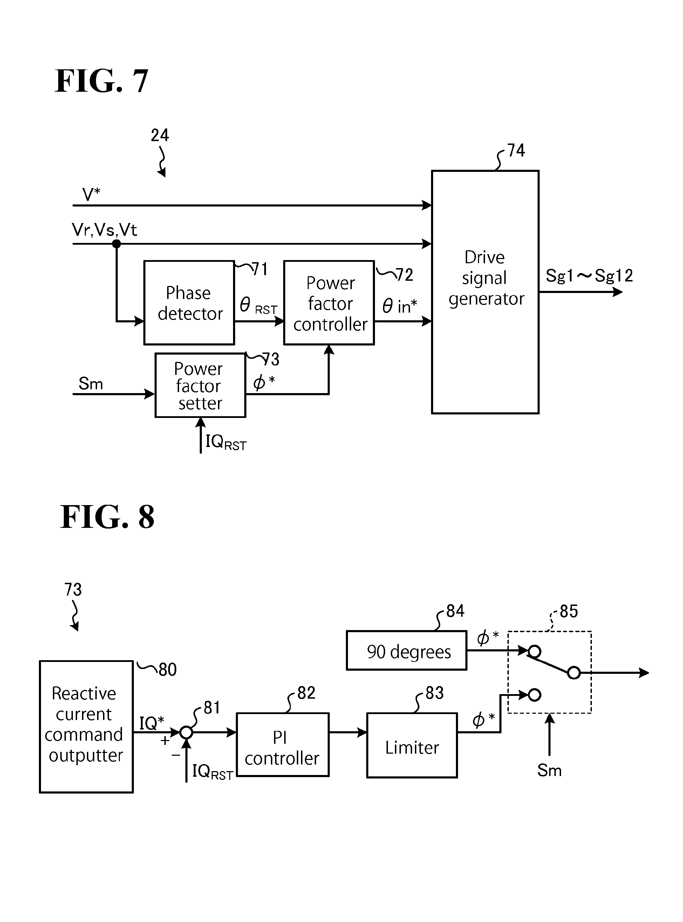

FIG. 7 is a schematic diagram illustrating an exemplary configuration of the cell controller 24. As illustrated in FIG. 7, the cell controller 24 includes a phase detector 71, a power factor controller 72, a power factor setter 73, and a drive signal generator 74.

An example of the cell controller 24 is implemented by a microcomputer including such components as a CPU, a ROM, a RAM, and input/output ports, or an integrated circuit such as an ASIC and an FPGA. The CPU of the microcomputer reads and executes a program stored in the ROM to implement part or all of the functions of the phase detector 71, the power factor controller 72, the power factor setter 73, and the drive signal generator 74. Alternatively, the circuit such as the ASIC and the FPGA may perform part or all of the functions of the phase detector 71, the power factor controller 72, the power factor setter 73, and the drive signal generator 74.

The phase detector 71 detects a system-side voltage phase $\theta_{RST}$ from system-side voltages $Vr, Vs,$ and $Vt$ detected by the voltage detector 23. Based on a power factor angle command $\phi^*$ notified from the power factor setter 73, the power factor controller 72 regulates the system-side voltage phase $\theta_{RST},$ and outputs the regulated system-side voltage phase $\theta_{RST}$ as an input power factor angle command $\theta in^*$ to the drive signal generator 74. The drive signal generator 74 controls the single-phase power conversion cell 21 to make the input power factor angle $\theta in$ equal to the input power factor angle

command $\theta in^*$.

The power factor setter 73 outputs a power factor angle command $\phi^*$ corresponding to the mode information Sm to the power factor controller 72. For example, when the mode information Sm indicates the first mode, the power factor setter 73 outputs to the power factor controller 72 such a power factor angle command $\phi^*$ that makes the reactive current $Iq_{RST}$ zero. In response to the power factor angle command $\phi^*$, the power factor controller 72 outputs to the drive signal generator 74 such an input power factor angle command $\theta in^*$ that makes the reactive current $Iq_{RST}$ zero.

When the mode information Sm indicates the second mode, the power factor setter 73 outputs to the power factor controller 72 such a power factor angle command $\phi^*$ that is delayed by 90 degrees. In response to the power factor angle command $\phi^*$, the power factor controller 72 outputs to the drive signal generator 74 such an input power factor angle command $\theta in^*$ that is 90 degrees delayed from the system-side voltage phase $\theta_{RST}$.

Thus, in the second mode, the input power factor angle command $\theta in^*$ is set to be 90 degrees delayed from the system-side voltage phase $\theta_{RST}$. Consequently, when switching between the bidirectional switches Sw1 to Sw6 is performed based on gate signals $Sg1$ to $Sg12$ output from the drive signal generator 74 in the second mode, the voltage output from the single-phase power conversion cell 21 to the rotating electric machine 2 is 0 V on average. In view of this, as described above, the main controller 18 amplifies threefold the voltage command $V^*$ output to the cell controller 24 to control the current control cells.

Also in the second mode, switching between the bidirectional switches Sw1 to Sw6 is performed. This ensures that the exciting current of the current flowing from the current control cell toward the rotating electric machine 2 flows as reactive current from the single-phase power conversion cell 21 toward the power system 3. In the second mode, as the voltage command $V^*$ generated by the second current controller 32 increases, the period of time in which the bidirectional switches Sw1 to Sw6 are on increases. Consequently, the reactive current flowing from the single-phase power conversion cell 21 toward the power system 3 increases.

FIG. 8 is a schematic diagram illustrating an exemplary configuration of the power factor setter 73. As illustrated in FIG. 8, the power factor setter 73 includes a reactive current command outputter 80, a subtractor 81, a PI controller 82, a limiter 83, a power factor angle command outputter 84, and a switch 85. The reactive current command outputter 80 outputs a reactive current command $Iq^*$ (for example, zero). The subtractor 81 subtracts the reactive current $Iq_{RST}$ from the reactive current command $Iq^*$.

By proportional integral control, the PI controller 82 generates such a power factor angle command $\phi^*$ that makes the deviation between the reactive current command $Iq^*$ and the reactive current $Iq_{RST}$ zero. The limiter 83 limits the power factor angle command $\phi^*$ to maintain the power factor angle command $\phi^*$ within a predetermined range (for example, -30 degrees to +30 degrees).

The power factor angle command outputter 84 outputs a power factor angle command $\phi^*$ set to be delayed by 90 degrees. When the mode information Sm indicates the first mode, the switch 85 outputs the power factor angle command $\phi^*$ received from the limiter 83. When the mode information Sm indicates the second mode, the switch 85 outputs the power factor angle command $\phi^*$ received from the power factor angle command outputter 84.

By referring back to FIG. 7, the cell controller 24 will be further described. The drive signal generator 74 of the cell controller 24 generates the gate signals $Sg1$ to $Sg12$ based on the voltage command $V^*$ acquired from the main controller 18, based on the system-side voltages $Vr$, $Vs$, and $Vt$, and based on the input power factor angle command $\theta in^*$. The gate signals $Sg1$ to $Sg12$ are input into the gates of the plurality of switching elements in the bidirectional switches Sw1 to Sw6. In this manner, the single-phase power conversion cell 21 is controlled.

For example, in a period of time in which the magnitude order of the system-side voltages $Vr$, $Vs$, and $Vt$ does not change, the drive signal generator 74 regards the system-side voltages $Vr$, $Vs$, and $Vt$ in descending order as input phase voltages $Ep$, $Em$, and $En$. Of the voltage commands $Vu^*$, $Vv^*$, and $Vw^*$, the drive signal generator 74 converts the voltage command corresponding to the single-phase power conversion cell 21 (for example, the voltage command $Vu^*$ in the case of the single-phase power conversion cell unit 20a) into pulse width modulation (PWM) signals based on the input power factor angle command $\theta in^*$. The PWM signals respectively correspond to the values of the input phase voltages $Ep$, $Em$, and $En$. The drive signal generator 74 subjects the PWM signals to commutation control processing to generate the gate signals $Sg1$ to $Sg12$.

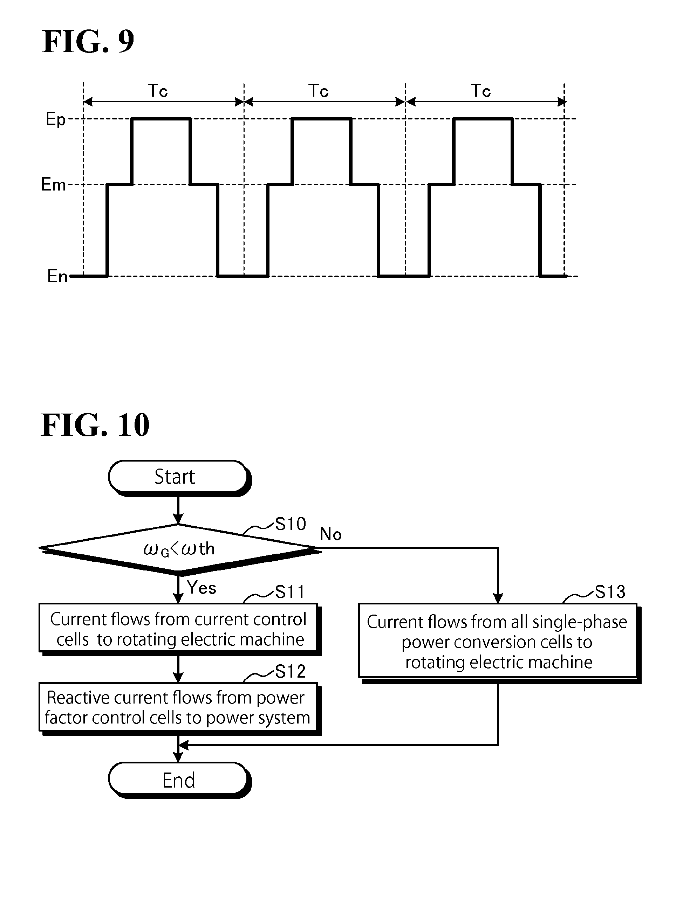

FIG. 9 is a graph illustrating exemplary switching among the voltages $Ep$, $Em$, and $En$ output to the rotating electric machine 2. As illustrated in FIG. 9, by controlling the bidirectional switches Sw using the gate signals $Sg1$ to $Sg12$, the input phase voltages output to the rotating electric machine 2 are switched in the manner: $En \rightarrow Em \rightarrow Ep \rightarrow Em \rightarrow En$ in one period of time $Tc$ of the PWM signal. As described later, the manner of switching the input phase voltage output to the rotating electric machine 2 will not be limited to $En \rightarrow Em \rightarrow Ep \rightarrow Em \rightarrow En$.

5. Processing Flow by Controller

FIG. 10 is a flowchart of exemplary processing performed by the controller including the main controller 18 and the cell controllers 24. The processing illustrated in FIG. 10 is repeatedly performed by the controller.

As illustrated in FIG. 10, the main controller 18 determines whether the rotation speed $\omega_G$ is lower than the threshold $\omega th$ (step S10). When the main controller 18 determines that the rotation speed $\omega_G$ is lower than the threshold $\omega th$ (step S10: Yes), the main controller 18 controls the current control cells to cause current to flow from the current control cells toward the rotating electric machine 2 (step S11).

At step S11, the main controller 18 generates such a voltage command $V^*$ that causes current to flow from the current control cells toward the rotating electric machine 2. Then, the main controller 18 outputs the voltage command $V^*$ to the cell controllers 24 corresponding to the current control cells. Based on the voltage command $V^*$, the cell controllers 24 control the bidirectional switches Sw1 to Sw6 of the current control cells to cause current to flow from the current control cells toward the rotating electric machine 2.

The main controller 18 controls the power factor control cells to cause reactive current to flow from the power factor control cells toward the power system 3 (step S12). In this processing, the main controller 18 generates a voltage command $V^*$ to cause reactive current to flow from the power factor control cells toward the power system 3. Then, the main controller 18 outputs the voltage command $V^*$ to the cell controllers 24 corresponding to the power factor control cells. Based on the voltage command $V^*$, the cell controllers 24 control the bidirectional switches Sw1 to Sw6 of the power factor control cells to cause the current flowing from the current control cells toward the rotating electric machine 2 to flow from the power factor control cells toward the power system 3 as reactive current.

At step S10, when the main controller 18 determines that the rotation speed $\omega_G$ is not lower than the threshold $\omega th$ (step S10: No), the main controller 18 controls all the single-phase power conversion cells 21 to cause current to flow from all the single-phase power conversion cells 21 toward the rotating electric machine 2 (step S13).

At step S13, the main controller 18 generates such a voltage command $V^*$ that causes current to flow from each of the single-phase power conversion cells 21 toward the rotating electric machine 2. Then, the main controller 18 outputs the voltage command $V^*$ to each of the cell controllers 24. Based on the voltage command $V^*$, each cell controller 24 controls the bidirectional switches Sw1 to Sw6 of the single-phase power conversion cell 21 to cause current to flow from the single-phase power conversion cell 21 toward the rotating electric machine 2.

6. Other Embodiments

In the above-described embodiment, the variable amplifiers 64 and 65 gradually change the amplifying rate with respect to the voltage command $V^*$ at the time of switching between the first mode and the second mode. Another possible example is to change the amplifying rate with respect to the voltage command $V^*$ in accordance with a change in the rotation speed $\omega_G$.

For example, when the mode information Sm indicating the second mode is changed to indication of the first mode, the variable amplifier 64 changes the amplifying rate from threefold to onefold at a change rate corresponding to the decreasing rate of the rotation speed $\omega_G$. When the mode information Sm indicating the first mode is changed to indication of the second mode, the variable amplifier 64 changes the amplifying rate from onefold to threefold at a change rate corresponding to the increasing rate of the rotation speed $\omega_G$.

When the mode information Sm indicating the second mode is changed to indication of the first mode, the variable amplifier 65 changes the amplifying rate from zerofold to onefold at a change rate in accordance with a decreasing rate of the rotation speed $\omega_G$. When the mode information Sm indicating the first mode is changed to indication of the second mode, the variable amplifier 65 changes the amplifying rate from onefold to zerofold at a change rate in accordance with an increasing rate of the rotation speed $\omega_G$.

In the above-described embodiment, the series multiplex matrix converter 1 causes lagging reactive current to flow from the single-phase power conversion cells 21 toward the power system 3. Another possible example is that the series multiplex matrix converter 1 causes leading reactive current to flow from the single-phase power conversion cells 21 toward the power system 3. For example, when lagging reactive current flows toward the power system 3 due to an element or a device disposed between the single-phase power conversion cells 21 and the power system 3, the main controller 18 may generate such a voltage command $V^*$ that causes leading reactive current to flow from the single-phase power conversion cells 21 toward the power system 3. In this case, in the second mode, the power factor setter 73 of the power factor control cell outputs such a power factor angle command $\phi^*$ that is 90 degrees leading, for example.

In the series multiplex matrix converter 1 according to the above-described embodiment, three single-phase power conversion cells 21 are connected in series to each other for each of the U phase, the V phase, and the W phase of the rotating electric machine 2. The number of the single-phase power conversion cells 21 connected in series may be two or four or more. In other words, it suffices for the power converter 13 to include "$n$" single-phase power conversion cells 21 ("$n$" is an integer of 2 or more) connected in series to each other for each of the phases of the rotating electric machine 2. The current control cells are "$m$" single-phase power conversion cells 21 among "$n$" single-phase power conversion cells 21 ($1 \le m < n$). The power factor control cells are "$n - m$" single-phase power conversion cells 21 among the "$n$" single-phase power conversion cells 21. The amplifier 63 amplifies "$n / m$"-fold the voltage command $V^*$ of the first current controller 31. The variable amplifier 64 changes the amplifying rate with respect to the voltage command $V^*$ of the first current controller 31 between "$n / m$"-fold and onefold.

The current control cells are "$m$" single-phase power conversion cells 21. Each of the "$m$" single-phase power conversion cells 21 for each of the phases of the rotating electric machine 2 is connected at a position in series to another single-phase power conversion cell 21 among the "$n$" single-phase power conversion cells 21. The series-connection position is identical across the phases of the rotating electric machine 2. In the example illustrated in FIG. 5, it is the single-phase power conversion cells 21 having the positions of series connection in the first stage that serve as the current control cells. The power factor control cells are "$n - m$" single-phase power conversion cells 21. Each of the "$n - m$" single-phase power conversion cells 21 for each of the phases of the rotating electric machine 2 is connected at a position in series to another single-phase power conversion cell 21 among the "$n$" single-phase power conversion cells 21. The series-connection position is identical across the phases of the rotating electric machine 2. In the example illustrated in FIG. 5, it is the single-phase power conversion cells 21 having the positions of series connection in the second stage and the third stage that serve as the power factor control cells. This prevents each control from varying among the phases of the rotating electric machine 2.

It is noted that the current control cells may be such single-phase power conversion cells 21 that have different positions of series connection. Similarly, the power factor control cells may be such single-phase power conversion cells 21 that have different positions of series connection. For example, the single-phase power conversion cells 21 at positions U1, V2, and W3 may serve as the current control cells, and the rest of the single-phase power conversion cells 21 may serve as the power factor control cells. Since the single-phase power conversion cells 21 at the positions U1, V2, and W3 have different voltage phases, use of these single-phase power conversion cells 21 as the current control cells reduces harmonics current flowing toward the primary winding 11.

In the series multiplex matrix converter 1 according to the above-described embodiment, three single-phase power conversion cells 21 are connected in series to each other for each of the U phase, the V phase, and the W phase of the rotating electric machine 2. Another possible example is that the rotating electric machine 2 is a single-phase rotating electric machine. In this case, the number of single-phase power conversion cell unit groups 14 is one, for example.

In the series multiplex matrix converter 1 according to the above-described embodiment, in the second mode, one of the single-phase power conversion cells 21 connected in series serves as the current control cell. Another possible example is that two of the single-phase power conversion cells 21 connected in series serve as the current control cells.

In the series multiplex matrix converter 1 according to the above-described embodiment, one of the first mode and the second mode is selected based on the rotation speed $\omega_G$ of the rotating electric machine 2. Another possible example is to select only the second mode irrespective of the rotation speed $\omega_G$ of the rotating electric machine 2.

Obviously, numerous modifications and variations of the present disclosure are possible in light of the above teachings. It is therefore to be understood that within the scope of the appended claims, the present disclosure may be practiced otherwise than as specifically described herein.

| | |
|---|---|
| 1 | Series multiplex matrix converter |
| 2 | Rotating electric machine |
| 3 | Power system |
| 4 | Position detector |
| 10 | Multiplex converter |
| 13 | Power converter |
| 14a to 14c | Single-phase power conversion cell unit group |
| 15 | Voltage phase detector |
| 16 and 17 | Current detector |
| 18 | Main controller |
| 20a to 20i | Single-phase power conversion cell unit |
| 21 | Single-phase power conversion cell |
| 22 | Filter |
| 23 | Voltage detector |
| 24 | Cell controller |
| 30 | Phase detector |
| 31 | First current controller |
| 32 | Second current controller |
| 33 | Outputter |
| 66 and 67 | Switch |
| 73 | Power factor setter |
| 100 | Power generation system |
| Sw1 to Sw6 | Bidirectional switch |

**Claims**

1. A series multiplex matrix converter (1), **characterized by**:

   a power converter (13) disposed between a power system (3) and a rotating electric machine (2) and comprising a plurality of power conversion cells (21) connected in series to each other; and
   a controller (18) configured to control at least one power conversion cell (21) among the plurality of power conversion cells (21) to cause a current to flow from the at least one power conversion cell (21) toward the rotating electric machine (2), and configured to control a rest of the plurality of power conversion cells (21) to cause the current flowing toward the rotating electric machine (2) to flow from the rest of the plurality of power conversion cells (21) toward the power system (3) as a reactive current.

2. The series multiplex matrix converter (1) according to claim 1,
wherein the plurality of power conversion cells (21) comprise "*n*" power conversion cells (21) for each of phases of the rotating electric machine (2), the power conversion cells (21) being connected in series to each other, "*n*" comprising an integer of two or more, wherein the at least one power conversion cell (21) comprises an "m" power conversion cell that is among the "*n*" power conversion cells (21) for each of the phases of the rotating electric machine (2), *m* and *n* being in a relationship of $1 \leq m < n$, the "*m*" power conversion cell (21) comprising a first series-connection position that is identical across the phases of the rotating electric machine (2), the series-connection position being where the "m" power conversion cell (21) is connected in series to another power conversion cell (21) among the "*n*" power conversion cells (21), and
wherein the rest of the plurality of power conversion cells (21) comprise "*n* - m" power conversion cells (21), among the "*n*" power conversion cells (21) for each of the phases of the rotating electric machine (2), the "*n* - m" power conversion cells (21) comprising a second series-connection position that is identical across the phases of the rotating electric machine (2).

3. The series multiplex matrix converter (1) according to claim 1 or 2, wherein the controller (18) comprises a plurality of cell controllers (24) configured to respectively control the plurality of power conversion cells (21),
a first current controller (31) configured to generate a first command for controlling the current flowing toward the rotating electric machine (2),
a second current controller (32) configured to generate a second command for controlling the reactive current flowing toward the power system (3), and
an outputter (33) configured to output the first command to the cell controllers (24) to control the at least one power conversion cell (21), and configured to output the second command to the cell controllers (24) to control the rest of the plurality of power conversion cells (21).

4. The series multiplex matrix converter (1) according to claim 3, wherein the outputter (33) comprises a switch (66, 67) configured to, when a rotation speed of the rotating electric machine (2) is equal to or higher than a first threshold, change the second command to the first command to be output to the plurality of cell controllers (24) to control the rest of the plurality of power conversion cells (21), and configured to, when the rotation speed of the rotating electric machine (2) is lower than a second threshold, change the first command to the second command to be output to the plurality of cell controllers (24) to control the rest of the plurality of power conversion cells (21).

5. The series multiplex matrix converter (1) according to claim 4,
wherein when the rotation speed of the rotating electric machine (2) is equal to or higher than the first threshold, the first current controller (31) is configured to decrease a magnitude of the first command in accordance of a number of the rest of the plurality of power conversion cells (21), and
wherein when the rotation speed of the rotating electric machine (2) is lower than the second threshold, the first current controller (31) is configured to increase the magnitude of the first command in accordance with the number of the rest of the plurality of power conversion cells (21).

6. The series multiplex matrix converter (1) according to any one of claims 3 to 5, wherein the second current controller (32) comprises a command generator (55) configured to generate the second command to make a magnitude of the reactive current flowing toward the power system (3) accord with a target power factor.

7. The series multiplex matrix converter (1) according to any one of claims 3 to 6, wherein the cell controller (24) comprises a power factor setter (73) configured to, when the reactive current flows toward the power system (3) based on the second command, delay a power factor angle command for the power system (3) by 90 degrees from a voltage phase of the power system (3).

8. A power generation system (100), **characterized by** the series multiplex matrix converter (1) according to any one of claims 1 to 7,
wherein the rotating electric machine (2) comprises a power generator.

9. A method for controlling a power factor, **characterized by**:

a first step of causing a current to flow toward a rotating electric machine (2) using at least one power conversion cell (21) among a plurality of power conversion cells (21), the plurality of power conversion cells (21) being disposed between a power system (3) and the rotating electric machine (2) and connected in series to each other; and
a second step of causing the current flowing toward the rotating electric machine (2) to flow toward the power system (3) as a reactive current using a rest of the plurality of power conversion cells (21).

**10.** The method according to claim 9, further comprising:

a third step of generating a first command for controlling the current flowing toward the rotating electric machine (2); and
a fourth step of generating a second command for controlling the reactive current flowing toward the power system (3),
wherein the first step comprises causing a current in accordance with the first command to flow toward the rotating electric machine (2) using the at least one power conversion cell (21), and
wherein the second step comprises causing a reactive current in accordance with the second command to flow toward the power system (3) using the rest of the plurality of power conversion cells (21).

**11.** The method according to claim 10, further comprising:

when a rotation speed of the rotating electric machine (2) is equal to or higher than a first threshold, a fifth step of changing the second command to the first command for the rest of the plurality of power conversion cells (21); and
when the rotation speed of the rotating electric machine (2) is lower than a second threshold, a sixth step of changing the first command to the second command for the rest of the plurality of power conversion cells (21).

**FIG. 1**

EP 2 963 791 A1

# FIG. 2

# FIG. 3

# FIG. 4

# FIG. 5

FIG. 6

**FIG. 7**

**FIG. 8**

# FIG. 9

# FIG. 10

Europäisches
Patentamt

European
Patent Office

Office européen
des brevets

# EUROPEAN SEARCH REPORT

Application Number

EP 15 17 4736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HIROKI TAKAHASHI ET AL: "Damping Control of Filter Resonance Focusing on Output Stage for Multi-Modular Matrix Converter", IEEJ JOURNAL OF INDUSTRY APPLICATIONS, vol. 2, no. 5, 2013, pages 242-251, XP055203720, ISSN: 2187-1094, DOI: 10.1541/ieejjia.2.242 | 1-5,8-11 | INV. H02M1/12 H02M1/42 H02M5/297 |
| Y | * the whole document * | 6,7 | |
| Y | ITOH J ET AL: "A high energy saving interface system using a matrix converter between a power grid and an engine generator for bio diesel fuel", 2011 IEEE TRONDHEIM POWERTECH : TRONDHEIM, NORWAY, 19 - 23 JUNE 2011, IEEE, PISCATAWAY, NJ, 19 June 2011 (2011-06-19), pages 1-7, XP032263454, DOI: 10.1109/PTC.2011.6019230 ISBN: 978-1-4244-8419-5 | 6,7 | |
| A | * the whole document * | 1-5,8-11 | |
| A | US 5 909 367 A (CHANGE JIE [US]) 1 June 1999 (1999-06-01) * the whole document * | 1-11 | |

TECHNICAL FIELDS SEARCHED (IPC)

H02M

The present search report has been drawn up for all claims

| Place of search | Date of completion of the search | Examiner |
|---|---|---|
| The Hague | 26 November 2015 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 4736

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2015

| Patent document cited in search report | Publication date | Patent family member(s) | Publication date |
|---|---|---|---|
| US 5909367 A | 01-06-1999 | NONE | |

EPO FORM P0459

For more details about this annex : see Official Journal of the European Patent Office, No. 12/82

**EP 2 963 791 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006174559 A